# EUROPEAN PATENT SPECIFICATION

(11) **EP 0 939 743 B1**
(45) Date of publication and mention of the grant of the patent: **04.10.2000**
(21) Application number: 97946037.5
(22) Date of filing: 14.11.1997
(51) Int. Cl.: C03B 11/14, C03B 9/31

(54) **METHOD FOR AUTOMATICALLY FORMING A GLASS CONTAINER WITH A BOTTOM CONTAINING A GOB OF GLASS INCORPORATING DECORATIVE BUBBLES**
VERFAHREN ZUR AUTOMATISCHEN HERSTELLUNG EINES GLASCONTAINERS MIT EINEM BODEN DER EINEN GLASKÜLBEL MIT DEKORATIVEN BLASEN UMFASST
PROCEDE DE FABRICATION AUTOMATISEE DE RECIPIENT EN VERRE DONT LE FOND COMPORTE UN CUL EN VERRE RENFERMANT DES BULLES DECORATIVES

(30) Priority: 19.11.1996 IT PR960044
(43) Date of publication of application: 08.09.1999
(73) Proprietor: Bormioli Rocco & Figlio S.p.A., 43100 Parma (PR) (IT)
(72) Inventor: DI GIUSEPPANTONIO, Vincenzo, I-43036 Fidenza (IT); DAVOLI, Ivano, I-43050 Costamezzana (IT); MENTA, Claudio, I-43011 Busseto (IT)
(74) Representative: Gotra, Stefano
(86) International application number: IT9700277
(87) International publication number: WO9822399

(56) References cited:
- EP-A- 0 039 490
- DE-A- 1 596 463
- FR-A- 1 058 684
- FR-A- 1 282 030
- FR-A- 2 134 337
- FR-A- 2 134 338
- US-A- 1 372 164
- US-A- 1 403 268

## Description

The present invention relates to a method for automatically forming a glass container with a bottom containing a gob of glass incorporating decorative bubbles.

At present glass containers, in particular glasses, having bubbles incorporated for decorative purposes in the glass mass are already manufactured, and the method used to obtain them is of the manual type.

It is obvious that this method results in high production costs and an inevitable degree of imprecision during execution.

The abovementioned method is described in FR-A-2134338 where the manufacture of a glass with a coloured base involves the following stages: modelling a first mass of glass of lenticular shape inside a mould forming impressions therein; manually blowing with a blow-pipe a second mass of glass, with a different colour, onto said first mass so that air bubbles are formed in the impressions; blowing and modelling a third mass of glass around the intermediate product consisting of the first two masses of glass joined together in the region of the air-bubble formation zone so as to obtain a glass container having on its bottom the first mass and the second mass of glass and air bubbles comprised between said two masses of glass.

The abovementioned method requires the use of as many as three separate masses of glass and does not allow the shape and size of the air bubbles to be controlled precisely, expansion of the air bubbles during formation depending on the temperature of the first and second mass of glass. The bubbles, moreover, are subject to deformation during the stage of final blowing of the container.

FR-A-2134337 discloses a method for manufacturing a glass containing decorations which is entirely similar to the above method and has the same drawbacks, whereby two possible embodiments of the decorative bubbles are illustrated.

FR-A-1058684 discloses an apparatus which forms glass articles having the drawbacks already listed.

A fluid gob of glass is blowed by means of a pipe against a plate which is provided with reliefs in such a way as corresponding cavities are produced in the blowed glass.

A second gob of glassis applied on the first gob ofglass by means of a second pipe in such a way as air bubbles are formed in the cavities between the two gobs of blowed glass.

The object of the present invention is to eliminate the abovementioned drawbacks and enable decorative bubbles to be obtained with an automated process of the industrial type.

A further object is to ensure effective control of the shape and arrangement of the bubbles.

These and other objects are all achieved by the method according to the present invention which is characterized by the contents of the claims indicated below and in particular in that it envisages the stages of:
- mechanically pre-forming a glass semi-finished product or intermediate container, the bottom of which is provided with a plurality of cavities;
- pressing a fluid gob of glass onto the bottom of said semi-finished product with formation of a final container, in which the fluid gob of glass has a viscosity such that it does not fill the cavities in which decorative bubbles are formed, said fluid gob of glass if necessary having a colour different from that of the glass of the semi-finished product.

The cavities may be formed in a concavity of the external surface of the bottom of the semi-finished product, into which the fluid gob of glass is then pressed, also forming, if required, a stem or support for the final container.

Mechanical pre-forming of the semi-finished product may be performed using different techniques.

The semi-finished product is obtained from the processing of a single mass or gob of glass.

The cavities have a predetermined shape and arrangement such that the decorative bubbles form designs, geometrical shapes or writing on the bottom of the container.

Before the final stage of pressing of the fluid gob of glass, a stage involving re-forming and stabilisation of the bottom of the semi-finished product may be performed by means of generation of a vacuum through a suction base-piece reproducing the convexity of the extractable base-piece.

These and other characteristic features will emerge more clearly from the following description of some preferred embodiments illustrated, purely by way of a non-limiting example, in the accompanying plates of drawings, in which:
- Figure 1 shows a longitudinal section through a rough during the stage of mechanical pre-forming;
- Figure 2 shows a longitudinal section through the rough during the stage of gravity lengthening and subsequent blowing, the left-hand and right-hand halves showing two successive moments;
- Figure 3 shows a section through the semi-finished product extracted from the pre-forming and blowing moulds;
- Figure 4 shows a longitudinal section through the semi-finished product during the re-forming and subsequent stabilisation stage;
- Figure 5 shows a section through the semi-finished product during the stage of pressing of a fluid gob of glass;
- Figure 6 shows a longitudinal section through a semi-finished product during a pressing stage in accordance with a possible variation of the method;
- Figure 7 shows the semi-finished product obtained by means of pressing in accordance with the stage of Figure 6;
- Figures 8 and 9 show the rough during the same stages as in Figures 1 and 2, in accordance with a further variation;
- Figures 10, 11 and 12 show a vertical section through three different embodiments of the moulds;
- Figures 13, 14 and 15 show a plan view of the moulds according to Figures 10, 11 and 12.

With reference to the Figures, 1 denotes a glass rough, or preform i.e. a provisional preliminary form for a container, for example a glass.

The preform 1 is obtained during a first stage of the method with the introduction of a mass or gob of high-temperature fluid glass inside a mould 2, which is then pressed with a piston 3.

The mould 2, in the example illustrated, is provided with a bottom with a fairly marked convexity and smooth surface so as to obtain a preform 1, the bottom of which has externally a corresponding concavity 9.

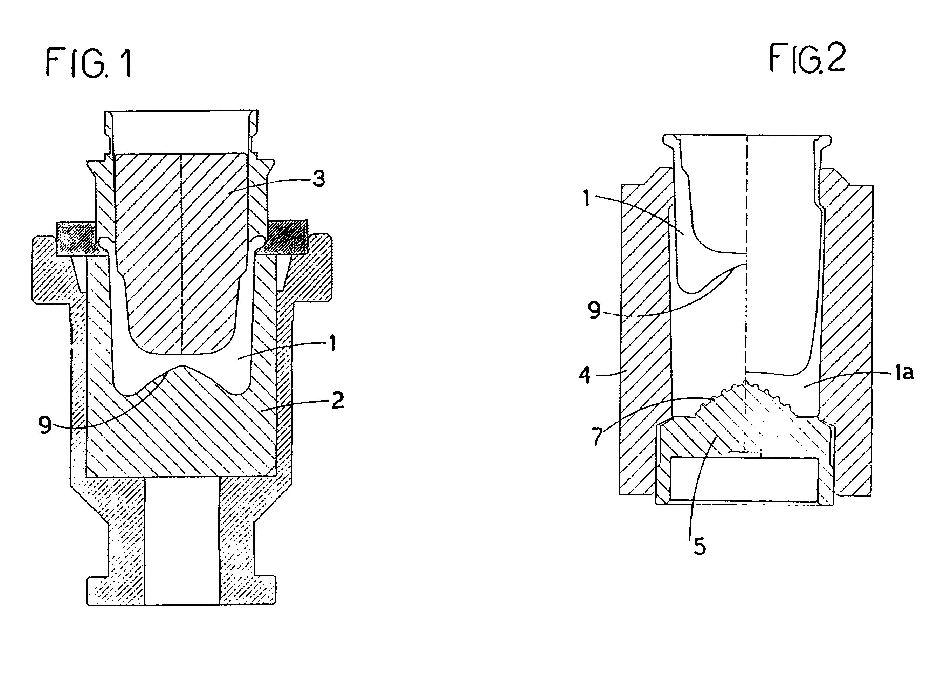

With reference to Figure 2, the preform 1 is enclosed during a second stage inside a finishing mould 4, with its bottom facing a vertically extractable base-piece 5 which is provided with a convexity substantially similar to that present on the bottom of the mould 2, but has a plurality of reliefs 7.

Immediately prior to closing the finishing mould around the preform 4, the preform is still at a sufficiently high temperature and has a certain fluidity, and therefore the glass mass, supported from above by an operating head not shown, tends to flow downwards as a result of gravity, lengthening in the free air until it comes to rest on the convexity of the extractable base-piece 5. Immediately after closing the finishing mould 4, blowing is performed automatically by the operating head along the vertical axis of the preform; at the same time both the glass inside the finishing mould 4 and the extractable base-piece 5 are made to rotate in synchronism in the case of cylindrical containers.

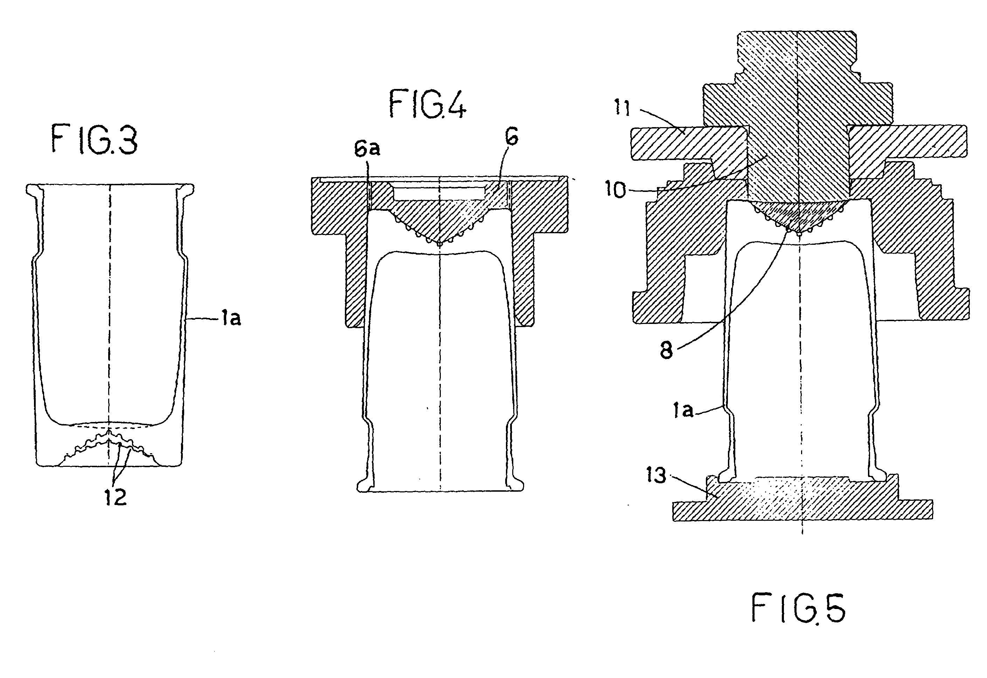

The second operating stage described above results in a semi-finished product 1a, shown in Figure 3, which has a plurality of cavities 12 on its external bottom. In the case of non-uniform shrinkage of the material during cooling, a third definitive re-forming and stablisation stage is envisaged, as shown in Figure 4, in order to obtain exactly and maintain the desired configuration of the bottom.

To achieve this result, said bottom is inserted into a cavity of a suction base-piece 6 which has a smooth surface with a curvature corresponding to that of the bottom of the semi-finished product la and a vacuum is generated by means of suitable ducts 6a formed in the base-piece itself, producing a sucking-up action which makes the concavity 9 of the bottom of the semi-finished product conform firmly to the said suction base-piece 6. Preferably an operating pressure of 350-400 mmHg is maintained for about 20-40 seconds.

At the end of said stage the semi-finished product la is completely cooled and its shape stabilised.

In this way all the bottoms of the containers have a cavity with the same containing capacity, a condition which is indispensable for the next stage.

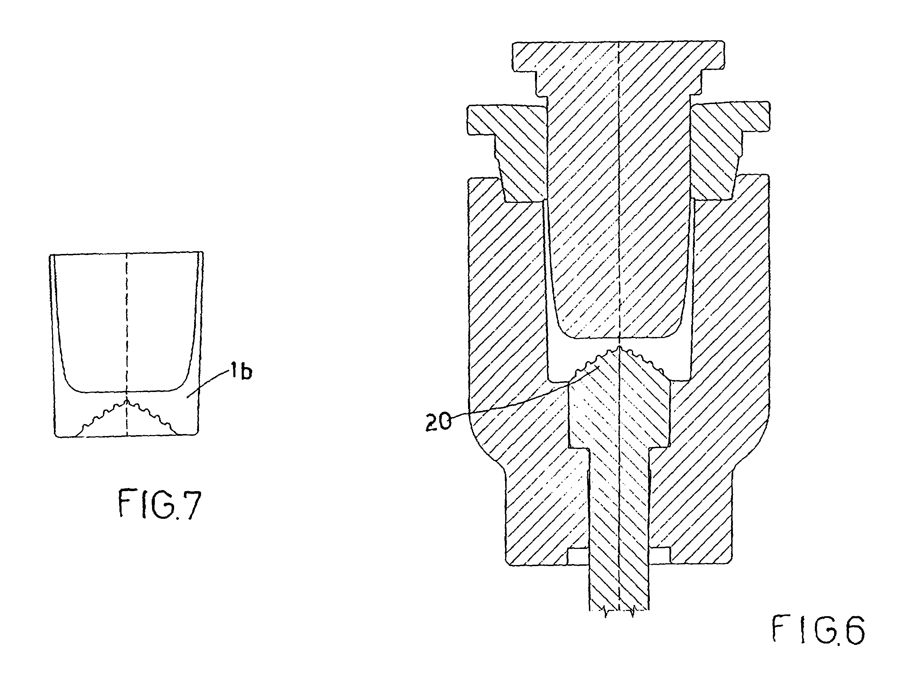

The method according to the present invention envisages, in fact, a fourth stage, shown in Figure 5, where a fluid mass or gob of glass 8 is deposited inside the concavity 9 and then pressed by means of a piston 10 which comes into abutment against a mechanical end-of-travel stop 11. The mechanical end-of-travel stop 11 has the function of providing a pressing action which always produces a container bottom which is perfectly flat (but, according to a variation not illustrated, the gob of glass, during the pressing stage, may be inserted into a mould designed to form for example a stem which is thus applied to the semi-finished product in order to obtain a final glass provided with bowl and stem).

The pressing system is provided without the aid of a traditional ring for avoiding bottoms with edges or burrs.

The said gob of glass is provided with a suitable fluidity so that it is able to flow over the cavities 12 without penetrating inside it, thus trapping inside them air bubbles which may assume a decorative appearance. The gob of glass which is placed in the cavity of the bottom has a constant volume which is the same as that of the cavity itself so as not to generate manufacturing defects.

The gob of glass 8 is generally coloured so as to highlight as much as possible the air bubbles trapped in the cavities 12.

Since the container may have different heights, the semi-finished product is rested with its open part on a support 13 which has the possibility of automatic adjustment of the vertical positioning.

In the description specific reference has been made to a glass with a cylindrical shape, but it is obvious that the method may also be used to obtain other types of containers which may also have a prismatic shape, in which case, during the second stage it will not be necessary to cause rotation both of the glass inside the finishing mould 4 and the vertically extractable base-piece 5.

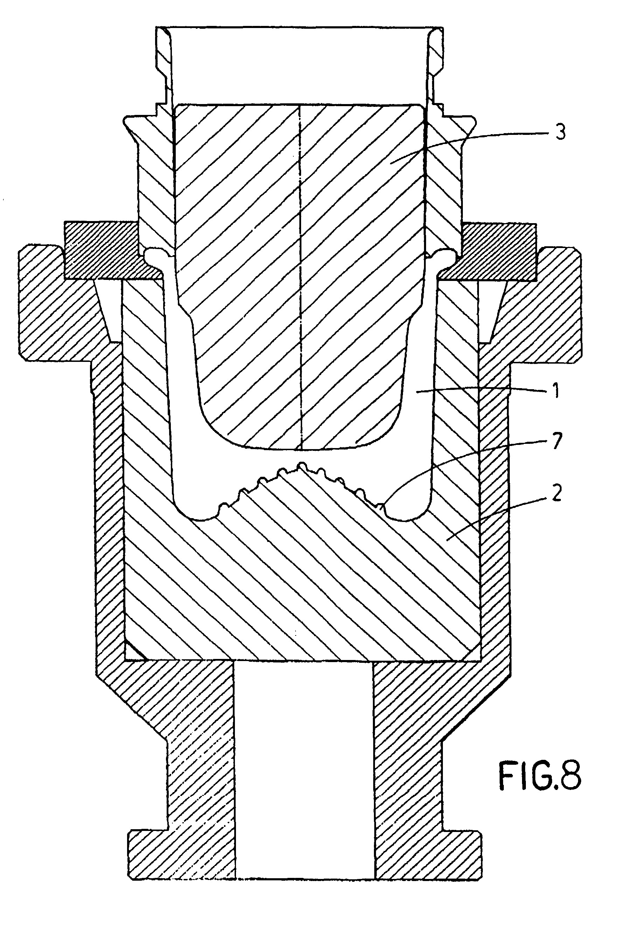

According to a possible variation to the method, shown in Figures 6 and 7, the semi-finished product may be obtained directly by means of pressing of a fluid mass or gob of glass inside a mould which has a shaped bottom 20 which generates an already stabilised shape. With this stage it is possible to obtain a semi-finished product 1b, the shaped bottom of which is provided with substantially rounded reliefs which produce corresponding cavities inside which the air will remain trapped when, during the subsequent stage, a gob of glass will be pressed. Basically, this variation to the basic method envisages only two stages, which correspond to a first modified stage of the basic method and to the fourth stage of the basic method.

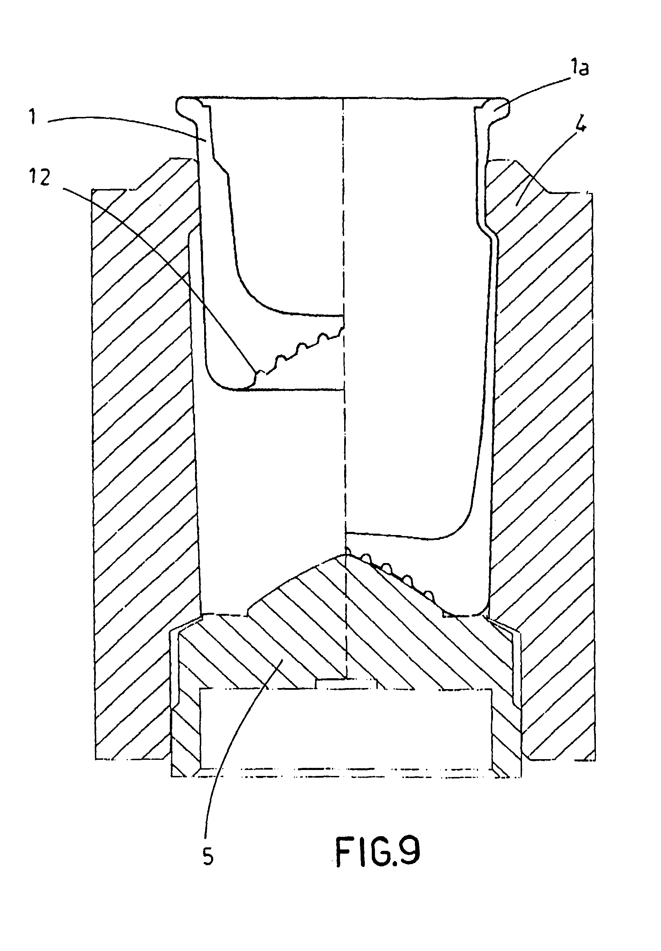

According to a further variation illustrated in Figures 8 and 9, the mould 2 has a convexity with a surface provided with reliefs 7 so as to generate a corresponding concavity in the bottom of the preform 1 provided with corresponding cavities 12. In this case the vertically extractable base-piece 5 of the finishing mould 4 has a convexity with a smooth surface.

Compared to the basic method, therefore, the characteristics of the surface (smooth or with reliefs) of the mould 2 and the extractable base-piece 5 are interchanged.

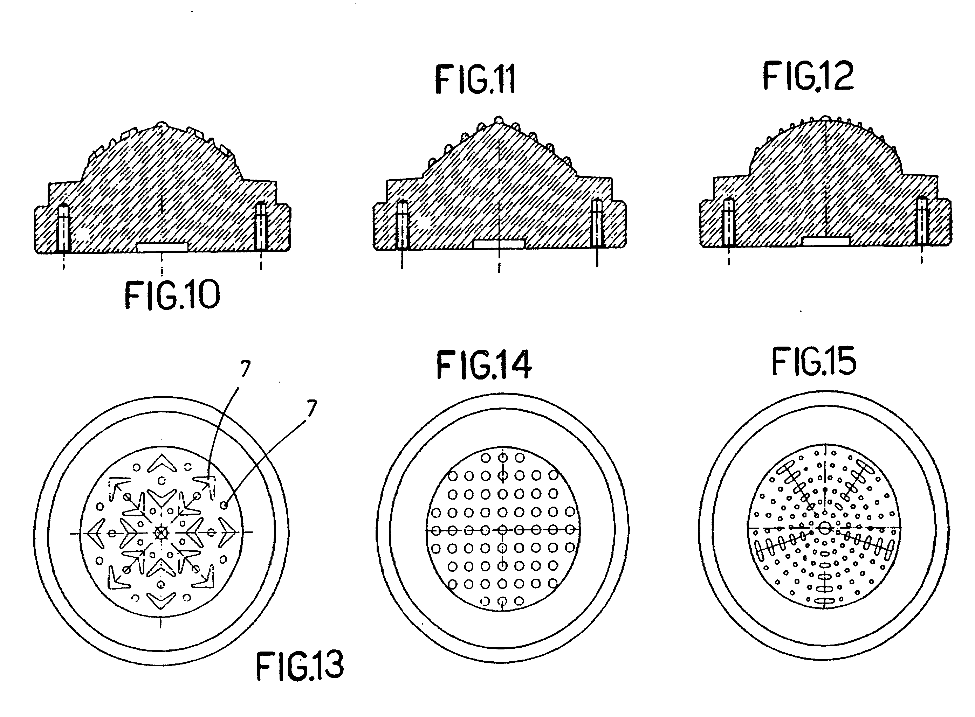

Figures 10 to 15 show three different types of moulds or base-pieces which differ from one another in terms of the arrangement and the shape of the reliefs 7 intended to create corresponding cavities 12 in which decorative bubbles with a particular shape and arrangement are formed, thus making it possible to create geometrical shapes, designs and writing on the bottom of the container obtained with the present method.

With the present method it is possible to create decorative bubbles with a predetermined shape and arrangement in the bottom of a container, in a completely automated manner and with the use of only two masses of glass: one for the intermediate container provided with cavities and one for the gob which covers said cavities without filling them.

With the present method it is also possible to achieve a high stability of the air bubbles during the formation of the container, since said air bubbles are created during the final stage of formation of the container and do not have to undergo any blowing stage which, in the methods of the known art, is the cause of uncontrolled deformation of said bubbles.

## Claims

1. Method for automatically forming a glass container with a bottom containing a gob of glass incorporating decorative bubbles, comprising the following steps:
- mechanically pre-forming a substantially cooled glass semi-finished product (1a, 1b) in the form of an intermediate container, the bottom of which is provided with a plurality of cavities (12);
- pressing a fluid gob of glass (8) onto the bottom of said semi-finished product (1a, 1b) with formation of a final container, in which the fluid gob of glass (8) has a viscosity such that it does not fill the cavities (12) thereby forming decorative bubbles, said fluid gob of glass if necessary having a colour different from that of the glass of the semi-finished product (1a, 1b).

2. Method according to Claim 1, in which the cavities are formed in a concavity (9) of the external surface of the bottom of the semi-finished product (1a, 1b), into which concavity (9) the fluid gob of glass (8) is subsequently pressed.

3. Method according to Claim 1, in which the mechanical pre-forming of a semi-finished product (1a) is performed by means of:
- mechanically pre-forming a preform (1) of fluid glass using a mould (2) provided with a convexity which generates a corresponding concavity (9) on the external part of the bottom of the preform (1);
- lengthening, by means of gravity, the preform (1) and subsequent automatic blowing performed by a blowing head which blows air along the vertical axis of the preform (1) inside a finishing mould (4) until the preform (1), still in the fluid state, conforms to the internal surface of the finishing mould (4) and to a vertically extractable base-piece (5) resulting in a cooled glass semi-finished product (1a), the mould (2), or the extractable base-piece (5), being provided with a plurality of reliefs (7) which produce the corresponding cavities (12) on the external surface of the concavity (9) on the external part of the bottom of the preform (1).

4. Method according to Claim 1, in which the mechanical pre-forming of a semi-finished product (1b) is performed by pressing a gob or mass of fluid glass inside a shaped mould (20) so as to produce a substantially cooled stabilised semi-finished product (1b) with a concavity (9) in the external surface of its bottom, the cavities (12) being formed in this concavity (9).

5. Method according to Claim 1, in which the semi-finished product (1a, 1b) is obtained from the processing of a single mass or gob of glass.

6. Method according to Claim 1, in which the fluid gob of glass (8) is pressed so that a stem or support for the final container is formed on the bottom of the semi-finished product (1a, 1b).

7. Method according to Claim 3, in which the mould (2) has a convexity with a smooth surface which produces a corresponding concavity (9) with a smooth surface on the bottom of the preform (1).

8. Method according to Claim 3, in which the mould (2) has a convexity with a surface provided with reliefs (7) which produces a corresponding concavity in the bottom of the preform (1) provided with corresponding cavities (12).

9. Method according to Claim 3, in which, prior to the final stage of pressing of the gob of glass (8) and prior to the complete cooling of the bottom of the semi-finished product, a stage involving re-forming and stabilisation of the bottom of the semi-finished product (1a) is performed by means of generation of a vacuum through a suction base-piece (6) having the same convexity as of the extractable base-piece (5).

10. Method according to Claim 1, in which the final stage involving pressing of the fluid gob of glass (8) is performed with a piston (10), the movement of which is limited by a mechanical end-of-travel stop (11) and the semi-finished product (1a) rests on a support (13) by means of its open side opposite to the bottom.

11. Method according to Claim 3, in which, during the stage involving gravity lengthening of the preform (1) and subsequent blowing, a stage involving synchronous rotation of the glass inside the finishing mould (4) with the extractable base-piece (5) is performed.

12. Method according to Claim 9, in which the generation of the vacuum through the suction base-piece (6) is of such a degree as to produce sucking-up of the bottom of the preform (1) possessing residual fluidity, so as to cause forced conformity thereof to the convexity of the suction base-piece (6) with consequent definitive and stabilised forming of said bottom and the formation of cavities (12) with a constant capacity.

13. Method according to Claim 1, in which the cavities (12) have a shape and arrrangement such that the decorative bubbles form designs, geometrical shapes or writing on the bottom of the container.

14. Glass container with a bottom containing a gob of glass incorporating decorative bubbles formed using a method according to any one of Claims 1 to 13.

## Patentansprüche

1. Verfahren zur automatischen Herstellung eines Glascontainers mit einem Boden, der einen Glaskülbel mit dekorativen Blasen umfasst, das folgende Schritte aufweist:
- automatisches Vorformen eines im wesentlichen abgekühlten Halbfertigproduktes aus Glas (1a, 1b) in Form eines Zwischencontainers mit einem Boden, der eine Vielzahl von Hohlräumen (12) aufweist;
- Pressen eines flüssigen Glaskülbels (8) auf den Boden des genannten Halbfertigproduktes (1a, 1b) und Ausformen eines endgültigen Containers, bei dem der flüssige Glaskülbel (8) derartig zähflüssig ist, dass er die Hohlräume (12) nicht ausfüllt und dekorative Blasen entstehen, wobei der genannte flüssige Glaskülbel gegebenenfalls eine andere Farbe als das Glas des Halbfertigproduktes (1a, 1b) aufweist.

2. Verfahren nach Anspruch 1, bei dem die Hohlräume in einer Konkavität (9) der äusseren Oberfläche des Bodens des Halbfertigproduktes (1a, 1b) ausgeformt werden, in welche Konkavität (9) daraufhin der flüssige Glaskülbel (8) gepresst wird.

3. Verfahren nach Anspruch 1, bei dem das mechanische Vorformen eines Halbfertigproduktes (1a) folgendermassen abläuft:
- mechanisches Vorformen eines vorläufigen Produktes (1) aus flüssigem Glas mithilfe einer eine Wölbung aufweisenden Form (2), welche Wölbung eine entsprechende Konkavität (9) auf der Aussenseite des Bodens des vorläufigen Produktes (1) bildet;
- Verlängern des vorläufigen Produktes (1) unter Einwirkung der Schwerkraft und daraufhin automatisches Ausblasen mithilfe eines Blaskopfes, der entlang der senkrechten Achse des vorläufigen Produktes (1) Luft in eine Fertigform (4) bläst, bis sich das noch flüssige vorläufige Produkt (1) an die Innenfläche der Fertigform (4) und an ein senkrecht abziehbares Bodenelement (5) anlegt, wodurch ein abgekühltes Halbfertigprodukt (1a) aus Glas entsteht, wobei die Form (2) bzw. das abziehbare Bodenelement (5) eine Vielzahl von Erhebungen (7) aufweist, welche entsprechende Hohlräume (12) auf der äusseren Oberfläche der Konkavität (9) auf der Aussenseite des Bodens des vorläufigen Produktes (1) bilden.

4. Verfahren nach Anspruch 1, bei dem das mechanische Vorformen eines Halbfertigproduktes (1b) durch Pressen eines Külbels oder einer flüssigen Glasmasse in einer Form (20) erfolgt, so dass ein im wesentlichen abgekühltes, stabiles Halbfertigprodukt (1b) mit einer Konkavität (9) in der äusseren Oberfläche seines Bodens gefertigt wird, wobei die Hohlräume (12) in dieser Konkavität (9) ausgeformt werden.

5. Verfahren nach Anspruch 1, bei dem das Halbfertigprodukt (1a, 1b) durch Verarbeiten einer einzelnen Glasmasse oder eines einzelnen Glaskübels erhalten wird.

6. Verfahren nach Anspruch 1, bei dem der flüssige Glaskülbel (8) gepresst wird, so dass für den endgültigen Container ein Stiel oder Halter am Boden des Halbfertigproduktes (1a, 1b) ausgeformt wird.

7. Verfahren nach Anspruch 3, bei dem die Form (2) eine Wölbung mit einer glatten Oberfläche aufweist, welche eine entsprechende Konkavität (9) mit einer glatten Oberfläche am Boden des vorläufigen Produktes (1) ausbildet.

8. Verfahren nach Anspruch 3, bei dem die Form (2) eine Wölbung mit einer Erhebungen (7) aufweisenden Oberfläche umfasst, welche Wölbung eine entsprechende Konkavität in dem Boden des vorläufigen Produktes (1) ausbildet, die entsprechende Hohlräume (12) aufweist.

9. Verfahren nach Anspruch 3, bei dem vor dem abschliessenden Pressen des Glaskülbels (8) und dem vollständigen Abkühlen des Bodens des Halbfertigproduktes ein Arbeitsschritt erfolgt, bei dem der Boden des Halbfertigproduktes (1a) mithilfe von Unterdruck umgeformt und stabilisiert wird, welcher Unterdruck durch ein dieselbe Wölbung wie das abziehbare Bodenelement (5) aufweisendes Bodensaugelement (6) hergestellt wird.

10. Verfahren nach Anspruch 1, bei dem der abschliessende Schritt des Pressens des flüssigen Glaskülbels (8) mithilfe eines Stempels (10) erfolgt, dessen Bewegung von einem mechanischen Endanschlag (11) begrenzt wird, und das Halbfertigprodukt (1a) mit seiner offenen dem Boden gegenüberliegenden Seite auf einem Halter (13) aufliegt.

11. Verfahren nach Anspruch 3, bei dem während des Schrittes, bei dem die Vorform (1) unter Einwirkung von Schwerkraft verlängert und daraufhin ausgeblasen wird, ein Schritt erfolgt, bei dem das Glas in der Endform (4) und das abziehbare Grundelement (5) gemeinsam gedreht werden.

12. Verfahren nach Anspruch 9, bei dem der Aufbau eines Unterdruckes durch das Bodensaugstück (6) derart gross ist, dass der noch eine Restfluidität aufweisende Boden des vorläufigen Produktes (1) nach oben gesaugt wird, so dass sich dieser zwangsweise an die Wölbung des Bodensaugstücks (6) anpasst, wodurch der Boden seine endgültige Form erhält und stabilisiert wird und Hohlräume (12) mit konstantem Volumen ausgeformt werden.

13. Verfahren nach Anspruch 1, bei dem die Hohlraume (12) so ausgeformt und angeordnet sind, dass die dekorativen Blasen Muster, geometrische Formen oder Schriften auf dem Boden des Containers bilden.

14. Glascontainer mit einem Boden, der einen Glaskülbel mit dekorativen Blasen umfasst, der mithilfe eines Verfahrens nach einem der vorhergehenden Ansprüche 1 bis 13 hergestellt wird.

## Revendications

1. Procédé de fabrication automatisée de récipient en verre dont le fond comporte un cul en verre renfermant des bulles décoratives, comprenant les phases suivantes:
- pré-formage mécanique d'un produit semi-fini (1a, 1b) en verre substantiellement refroidi sous la forme d'un conteneur intermédiaire, dont le fond est pourvu d'une pluralité de cavités (12);
- moulage d'une goutte fluide de verre (8) sur le fond dudit produit semi-fini (1a, 1b) avec formation d'un conteneur final, dans lequel la goutte de verre fluide (8) présente une viscosité lui permettant de ne pas remplir les cavités (12) et donc de former les bulles décoratives, ladite goutte de verre fluide ayant si nécessaire une couleur différente de celle du verre du produit semi-fini (1a, 1b).

2. Procédé selon la revendication 1, dans lequel les cavités sont formées dans une concavité (9) de la surface externe du fond du produit semi-fini (1a, 1b), concavité (9) dans laquelle est ensuite moulée la goutte fluide de verre (8).

3. Procédé selon la revendication 1, dans lequel le pré-formage mécanique d'un produit semi-fini (1a) est réalisé au moyen de:
- pré-formage mécanique d'une préforme (1) de verre fluide en utilisant un moule (2) pourvu d'une forme convexe qui génère une concavité (9) correspondante sur la partie externe du fond de la préforme (1);
- l'allongement, par gravité, de la préforme (1) et le successif soufflage automatique réalisé par une tête de soufflage qui souffle de l'air le long de l'axe vertical de la préforme (1) à l'intérieur d'un moule de finition (4) jusqu'à ce que la préforme (1), encore dans un état fluide, adhère à la surface interne du moule de finition (4) et à une embase (5) verticalement extractible avec l'obtention d'un produit semi-fini (1a) en verre refroidi, le moule (2), ou l'embase extractible (5), étant pourvus d'une pluralité de reliefs (7) qui produisent les cavités correspondantes (12) sur la surface externe de la concavité (9) sur la partie externe du fond de la préforme (1).

4. Procédé selon la revendication 1, dans lequel le pré-formage mécanique d'un produit semi-fini (1b) est réalisé en compressant une goutte ou masse de verre fluide dans un moule (20) de manière à produire un produit semi-fini (1b) substantiellement refroidi présentant une concavité (9) sur la surface externe de son fond, les cavités (12) étant formées dans cette concavité (9).

5. Procédé selon la revendication 1, dans lequel le produit semi-fini (1a, 1b) est obtenu par l'intermédiaire de la transformation d'une seule masse ou goutte de verre.

6. Procédé selon la revendication 1, dans lequel la goutte de verre fluide (8) est compressée de manière à ce qu'un pied ou support pour le récipient final soit formé sur le fond du produit semi-fini (1a, 1b).

7. Procédé selon la revendication 3, dans lequel le moule (2) présente une convexité ayant une surface lisse produisant une concavité (9) correspondante avec une surface lisse sur le fond de la préforme (1).

8. Procédé selon la revendication 3, dans lequel le moule (2) présente une convexité ayant une surface pourvue de reliefs (7) qui produisent une concavité correspondante pourvue de cavités (12) sur le fond de la préforme (1).

9. Procédé selon la revendication 3, dans lequel, avant la phase finale de compression de la goutte de verre (8) et avant le refroidissement complet du fond du produit semi-fini, une phase comprenant le reformage et la stabilisation du fond du produit semi-fini (1a) est réalisée au moyen de la génération de vide au travers d'une embase d'aspiration (6) présentant la même convexité que l'embase extractible (5).

10. Procédé selon la revendication 1, dans lequel la phase finale comprenant la compression de la goutte de verre (8) est réalisée au moyen d'un piston (10), le mouvement duquel étant limité par une butée de fin de course mécanique (11) et le côté ouvert du produit semi-fini (1a), opposé au fond de ce même produit semi-fini, reposant sur un support (13).

11. Procédé selon la revendication 3, dans lequel, pendant la phase comprenant l'allongement par gravité de la préforme (1) et soufflage successif de celle-ci, est réalisée une phase comprenant la rotation du verre à l'intérieur du moule de finition (4) avec l'embase extractible (5).

12. Procédé selon la revendication 9, dans lequel la génération du vide au travers de l'embase d'aspiration (6) est telle qu'elle produit la suction du fond de la préforme (1) présentant une fluidité résiduelle, de manière à causer la conformation forcée de celle-ci à la convexité de l'embase d'aspiration (6) avec la conséquente formation définitive et stabilisée dudit fond et la formation de cavités (12) ayant une capacité constante.

13. Procédé selon la revendication 1, dans lequel les cavités (12) ont une forme et une disposition de manière à ce que les bulles décoratives forment des dessins, des formes géométriques ou des inscriptions sur le fond du récipient.

14. Récipient en verre avec un fond comportant un cul en verre renfermant des bulles décoratives formées en utilisant un procédé selon n'importe laquelle des revendications 1 à 13.
